Europäisches Patentamt

European Patent Office

Office européen des brevets

(19)

(11) Veröffentlichungsnummer: **0 044 083**
**A1**

(12) ## EUROPÄISCHE PATENTANMELDUNG

(21) Anmeldenummer: 81105525.0

(22) Anmeldetag: 14.07.81

(51) Int. Cl.³: **B 29 D 27/04**
**B 29 C 17/03**

(30) Priorität: 14.07.80 DE 3026645

(43) Veröffentlichungstag der Anmeldung:
20.01.82 Patentblatt 82/3

(84) Benannte Vertragsstaaten:
AT BE CH DE FR GB IT LI LU NL SE

(71) Anmelder: Alkor GmbH Kunststoffverkauf
Morgensternstrasse 9 Postfach 71 0109
D-8000 München 71(DE)

(72) Erfinder: Landler, Josef
Schiessstättstrasse 84
D-8190 Wolfratshausen(DE)

(72) Erfinder: Berger, Maximilian
Poignring 14
D-8190 Wolfratshausen(DE)

(74) Vertreter: Weickmann, Heinrich, Dipl.-Ing
Patentanwälte Dipl.Ing.H.Weickmann et al,
Dipl.Phys.Dr.K.Fincke Dipl.Ing.F.A.Weickmann
Dipl.Chem.B.Huber, Dr.-Ing.H.Liska Möhlstrasse 22
D-8000 München 86(DE)

(54) **Verfahren zur Herstellung von mit einem Schaumstoff ausgeschäumten Kunststoff-Folientiefziehteilen.**

(57) Bei einem Verfahren zur Herstellung von Formkörpern, welche aus einem tiefgezogenen thermoplastischen Tiefziehfolienzuschnitt bestehen und auf ihrer Rüchseite ausgeschäumt sind, wobei auf der Sichtseite des Tiefziehfolienzuschnitts eine thermoplastische Schutzfolie bereits vor dem Tiefziehen und dem Ausschäumen aufgebracht wird, welche mit der Sichtseite der Tiefziehfolie eine die Erwärmung auf die für den Tiefziehvorgang erforderliche Tiefziehtemperatur sowie den Tiefziehvorgang und den Ausschäumvorgang überdauernd Haftverbindung eingeht, jedoch andererseits an der Tiefziehfolie nur so weit haftet, daß nach Fertigstellung des Formteils die Schutzfolie mit etwa an ihr haftendem Schaum möglichst ohne Einreißen wieder von der Sichtseite abgezogen werden kann, wird vorgeschlagen, daß die Schutzfolie auf eine vorher - insbesondere durch Prägen mit einer Feinstruktur versehene Sichtseite der Tiefziehfolie aufgebracht wird.

FIG.3

EP 0 044 083 A1

Eine tiefziehfähige Folie aus einer PVC-ABS-Abmischung wird im Verarbeitungswerk tiefgezogen und danach mit Schaumstoff auf der sichtflächenfernen Seite hinterschäumt. Das Hinterschäumen erfolgt in Aufschäumungsformen, die in der Regel keine Sicherheit dagegen bieten, daß an den Formschließstellen aufschäumendes oder noch nicht aufgeschäumtes Material auch auf die Sichtseite der Tiefgezogenen ABS-PVC-Folie gelangt. Dieses auf die Sichtseite gelangende Schaumstoffmaterial, das in der Regel Polyurethan-Schaumstoffmaterial ist, kann sich dabei an der Sichtseite des tiefgezogenen PVC-ABS-Folienzuschnitts festsetzen und läßt sich später von der Sichtseite nicht mehr lösen, so daß das ganze Formteil Ausschuß bildet.

Um dem abzuhelfen, ist es bekannt geworden, auf den Tiefziehfolienzuschnitt eine Wachsschicht aufzubringen und zwar dadurch, daß in die Schäumform auf der der Sichtseite zugewandten Seite ein flüssiges Wachs aufgetragen wird, welches sich wenigstens teilweise auf die Sichtseite des Tiefziehfolienzuschnitts überträgt. Der Wachsauftrag erfolgt an denjenigen Stellen, an denen mit Schaumeinwirkung auf die Sichtseite gerechnet werden kann. In diesen Bereichen wird die Sichtfläche des Tiefziehfolienteils mit einer zusammenhängenden Wachsschicht bedeckt. Zusätzlich oder alternativ ist es auch bekannt, das tiefgezogene Kunststofffolienformteil auf seiner Sichtseite mit Wachs vor dem Einlegen in die Schäumform zu besprühen. Die Wachsschicht reduziert das Festhaften etwa übertretenden Schaumes an der Sichtseite, so daß der Schaum nach dem Entnehmen aus der Tiefziehform von der Sichtseite erleichtert abgezogen werden kann. Beim Abziehen des Schaumes von der Sichtseite bleibt jedoch mindestens ein Teil des Wachses, d.h. insbesondere in denjenigen Bereichen, in denen kein Schaum übergetreten ist, an der Sichtseite der tiefgezogenen Folie

haften. Diese Wachsreste sind aber unerwünscht und müssen anschließend in einem Waschvorgang von der Sichtseite abgewaschen werden. Dies ist mühsam und führt zu Ungleichmäßigkeiten in der Sichtseitenoberfläche, da die Folie durch den Waschvorgang angegriffen werden kann. Ein gleichmäßiges Abwaschen des Wachses ist kaum möglich. Auch hat sich gezeigt, daß trotz einer vorhandenen Wachsschicht der Schaumstoff eine gut haftende Verbindung mit der Sichtseite des tiefgezogenen Folienzuschnitts eingehen kann, so daß das Abziehen dieser Schaumstoffreste mühsam und oft unzureichend ist. Dabei ist insbesondere auch zu beachten, daß die Folie auf ihrer Sichtseite häufig bereits mit einem Lack versehen ist und gerade dieser Lack ist gegen den Wachsabwaschvorgang sehr empfindlich, da dieser Wachsabwaschvorgang mit einem Lösungsmittel vorgenommen werden muß, welches unvermeidlich auch den Lack mit angreift.

Zur Vermeidung dieser Schwierigkeiten wird zur Herstellung von Formkörpern, welche aus einem tiefgezogenen Tiefziehfolienzuschnitt (z.B. aus PVC-ABS) bestehen und auf ihrer Rückseite ausgeschäumt sind, ein Verfahren angewandt, bei dem die Schutzschicht in Form einer Schutzfolie bereits vor dem Tiefziehen aufgebracht wird, welche mit der Sichtseite der Tiefziehfolie eine den Tiefziehvorgang und den Ausschäumvorgang überdauernde Haftverbindung eingeht, jedoch andererseits an der Tiefziehfolie nur so weit haftet, daß nach Fertigstellung des Formteils die Schutzfolie mit etwa an ihr haftendem Schaum möglichst ohne Einreißen wieder von der Sichtseite abgezogen werden kann mit der Besonderheit, daß die Schutzfolie auf eine vorher insbesondere durch Prägen mit einer Feinstrucktur versehene Sichtseite der Tiefziehfolie aufgebracht wird.

Die Verbindung zwischen der Schutzfolie und der Sichtseite
der Tiefziehfolie muß dabei so sein, daß das Abziehen der
Schutzfolie ohne Zerstörung der Sichtfläche erfolgen kann,
also insbesondere ohne Beeinträchtigung einer auch in diesem
Fall wieder vorhandenen Lackschicht auf der Tiefziehfoliensichtseite. Die Lackschicht auf der Tiefziehfoliensichtseite besteht beispielsweise aus PVC-Acrylat-Lacken, die
über eine Druckwalze aufgetragen sein können. Eine geeignete Schutzfolie für diesen Fall ist eine Verbundfolie
aus einer Polyäthylen-Schicht und einer Äthylenvinylacetat-
Schicht, wobei die Äthylenvinylacetat-Schicht sowohl an den
Polyähtylen als auch an dem PVC-Acrylatlack haftet und
zwar in dem, wie oben definiert, gewünschten Maße. Das
Äthylenvinylacetat steht mit der Polyäthylenschicht von
der Herstellung der Schutzfolie her in einer gut haftenden
Verbindung, die beispielsweise durch Koextrusion gewonnen
wird. Die für den Zusammenhalt beim Tiefzieh- und Ausschäumvorgang ausreichende, dann aber doch wieder lösbare Haftung an der Lackoberfläche der Tiefziehfoliensichtfläche wird
erreicht durch Kalandrieren der Schutzfolie auf die Tiefziehfolie ggf. nach vorheriger Koronavorbehandlung der
EVA-Schicht (Äthylenvinylacetatschicht) und ggf. unter
Wärme, wobei der optimale Haftwert der EVA-Schicht zur
Lackschicht durch einfache Versuche ermittelt werden kann
und zwar durch Variation der Intensität der Koronabehandlung und/oder der Auftragtemperatur und/oder des Auftragdruckes. Die Haftvermittlerschicht braucht nicht aus reinem
Äthylenvinylacetat zu bestehen, sondern kann ihrerseits aus
einer Mischung von Poyäthylen und Äthylenvinylacetat bestehen, wobei der Anteil des Äthylenvinylacetats in der
diese Haftvermittlerschicht bildenden Mischung ihrerseits
ein variables Parameter für die Einstellung der Haftfähigkeit zur Lackschicht bildet.

- 9 -

Wenn hier von einer Feinstruktur die Rede ist, so soll
damit zum Ausdruck gebracht werden, daß es sich um ein
Oberflächenmuster handelt, welches unabhängig ist von der
beim späteren Tiefziehvorgang sich ergebenden Form.

Es hat sich gezeigt, daß bei dem erfindungsgemäßen Verfahren unter Verwendung einer mit einer solchen Feinstruktur
versehenen Tiefziehfolie unerwartete Vorteile auftreten:
Wenn man nach dem zum Stand der Technik gehörigen Verfahren, bei dem der Wachsauftrag nach dem Tiefziehen angebracht wurde, eine geprägte, mit Feinstruktur versehene
Tiefziehfolie dem Tiefziehvorgang unterworfen hat, nach
vorangehender Erhitzung der Tiefziehfolie, insbesondere
durch Infrarotbestrahlung, so ergab sich beim Tiefziehen häufig
eine unerwünschte Verformung der Feinstruktur und häufig auch
ein unerwünschter Glanz. Bei dem erfindungsgemäßen Verfahren
zeigt sich deutlich, daß die Feinstruktur im wesentlichen
erhalten bleibt und ein Glanz nicht auftritt. Diese Erscheinung ist nicht voll erklärt. Denkbar ist folgender Wirkungsmechanismus: Beim Aufheizen der Tiefziehfolie für den nachfolgenden Tiefziehvorgang durch Wärmeeinstrahlung, insbesondere durch Wärmeeinstrahlung von der Sichtseite her, tritt
in der transparenten Schutzfolie eine wesentlich geringere
Wärmeabsorption auf als in der regelmäßig nicht transparenten Tiefziehfolie selb
Die Schutzfolie bleibt deshalb im Vergleich zu der Tiefziehfolie
relativ kühler. Diese Schutzfolie liegt nun an der Oberflächenschicht der Tiefziehfolie an, welche die Feinstruktur aufweist, und zwar liegt sie insbesondere an den erhabenen Flächenbereichen dieser Feinstruktur an. Die besonders stark
aufgeheizte Oberflächenschicht der Tiefziehfolie kann deshalb durch Wärmeabführung in die Schutzfolie vor Überhitzung
bewahrt werden. Dies hat zur Folge, daß beim Tiefziehen die
Feinstruktur weniger plastisch ist als sie es bei Nichtvorhandensein der Schutzfolie wäre.

Es kann durch Auswahl des Wellenlängenspektrums des zur Erhitzung vor dem Tiefziehen verwendeten Strahlers dafür gesorgt werden, daß in der Schutzfolie nur eine definierte Wärmeabsorption eintritt, die einerseits ausreicht, um auch die Schutzfolie in einen für den Tiefziehvorgang ausreichenden plastischen Zustand zu versetzen, andererseits aber gering genug ist, um eine ausreichende Wärmeabführung von der Feinstruktur in die Schutzfolie zu gewährleisten.

Es hat sich weiter gezeigt, daß bei dem erfindungsgemäßen Verfahren die Schichtstärke (Dicke) der Tiefziehfolie reduziert werden kann. Ist eine Schutzfolie nicht vorhanden, so ist eine bestimmte Mindestdicke der Tiefziehfolie erforderlich, einmal um eine ausreichende Steifigkeit der Tiefziehfolie für das Entformen aus der Tiefziehform und für die Weiterverarbeitung zu gewährleisten. Auch mußte eine bestimmte Mindestdicke bei Fehlen der Schutzfolie für die Tiefziehfolie eingehalten werden, um eine gewisse Narbstabilität zu erreichen und das Auftreten von unerwünschten Glanzeffekten in der Sichtseite zu vermeiden. Es hat sich nun gezeigt, daß bei dem erfindungsgemäßen Verfahren die Mindestdicke der Tiefziehfolie durch das Vorhandensein der Schutzfolie reduziert werden kann, weil die Schutzfolie einmal zu einer erhöhten Steifigkeit beiträgt und andererseits aus den oben diskutierten Gründen zu einer Stabilisierung der Feinstruktur und einer Verhinderung von Glanzeffekten beiträgt. Demnach kann die Dicke der Tiefziehfolie unter das bisher für erforderlich gehaltene Mindestmaß herabgesetzt werden, ohne daß - wegen des Vorhandenseins der Schutzfolie - eine unerwünschte Verminderung der Steifigkeit, eine unerwünschte Veränderung der Prägung und eine unerwünschte Glanzbildung auftreten. Das erfindungsgemäße Verfahren kommt in großem Umfang zur Herstellung von Verkleidungsteilen, beispielsweise im Automobilinnenausbau, zur Anwendung.

- 11 -

Es hat sich weiter gezeigt, daß bei einem solchen Verfahren,
insbesondere dann, wenn die Tiefziehfolie selbst eine verhältnismäßg dünne Folie ist, diese bei der Abkühlung von der Verformungstemperatur und der nachfolgenden Lagerung einem unerwünschten Verzug unterliegt.

Untersuchungen haben ergeben, daß dieser Verzug darauf zurückzuführen ist, daß eine Polyäthylenschutzfolie bei der Abkühlung und nachfolgenden Lagerung des Formkörpers einem
Schrumpfvorgang unterliegt, welcher auf die dann eintretende
Kristallisation der Polyäthylenschutzfolie zurückzuführen
sein dürfte.

Die Erfindung will deshalb weiter ein Verfahren angeben,
bei welchem Verformungen des ausgeformten Formkörpers während
des Abkühlvorganges und während der Lagerungsperiode vermieden
werden, insbesondere, wenn der Tiefziehfolienzuschnitt selbst
eine verhältnismäßig geringe Schichtstärke besitzt und deshalb
in besonderem Maße der Verzugsgefahr unterliegt.

Im Hinblick auf dieses Ziel schlägt die Erfindung weiter vor,
daß eine Schutzfolie verwendet wird, welche wenigstens zum
Teil aus amorphem Material besteht, welches beim Abkühlen
von der Tiefziehtemperatur und der nachfolgenden Lagerung
des Formkörpers keinen wesentlichen Schrumpf erleidet.

Es hat sich gezeigt, daß die Verzugserscheinungen bei Anwendung dieses zusätzlichen Gedankens von selbständiger Bedeutung ausbleiben. Die Verwendung einer amorphen Schutzfolie
die bei der Abkühlung und der nachfolgenden Lagerung nicht zur Kristallisation neigt, führt dazu, daß die Schutzfolie nach dem
in plastischem Zustand (dies gilt auch für die Schutzfolie
selbst) durchgeführten Tiefziehvorgang keinerlei Erinnerungsvermögen an den Zustand vor dem Tiefziehen besitzt
und deshalb keine Tendenz hat, sich an den Zustand vor dem

- 12 -

Tiefziehen wieder anzunähern und damit das tiefgezogene
Formteil zu deformieren. Da auch keine Tendenz zur Kristallisierung besteht, tritt auch kein kristallisationsbedingter
Schrumpf auf, der zur Verformung des tiefgezogenen Formteils
führen könnte. Dies ist von entscheidender Bedeutung, da die
Tiefziehformteile vor ihrer Einführung in die Ausschäumform
regelmäßig längere Zeit gelagert werden, so daß sie im Falle
einer eintretenden Verformung nur noch mit Schwierigkeiten
oder gar nicht mehr in die Hinterschäumungsform eingeführt
werden könnten.Bei der Verwendung einer Schutzfolie mit Gehalt
an amorphem Material, welche keinem Verzug unterliegt, bereitet es hingegen keine Schwierigkeiten, das tiefgezogene
Formteil, auch wenn es dünnwandig und labil ist, in die ihm
entsprechende Hinterschäumungsform einzuführen und dieses
sodann in der Hinterschäumungsform ordnungsgemäß zu
hinterschäumen.

Die Schutzfolie kann auch in diesem Fall eine EIN-Schichtfolie sein, welche gegebenenfalls einen Haftvermittleranteil
enthält. Daneben kann die Schutzfolie wiederum eine Mehrschichtfolie, insbesondere eine ZWEI-Schichtfolie sein, wobei eine
außenliegende Schicht die Funktion einer Haftvermittlerschicht
übernimmt. Als amorphe Schutzfolien kommen insbesondere solche
mit PVC-Gehalt und CPE-Gehalt (chloriertes Polyäthylen) in
Frage.

Als Haftvermittler kommt auch hier insbesondere EVA (Äthylen-
Vinylacetat-Copolymerisat) in Frage und zwar sowohl dann, wenn
der Haftvermittler dem Material einer EIN-Schichtfolie zugesetzt
ist, als auch dann, wenn der Haftvermittler als besondere
Schicht vorliegt.

Liegt der Haftvermittler als besondere Schicht vor, so ist
darauf zu achten, daß die Haftvermittlerschicht nicht ihrerseits zu Verwerfungen der tiefgezogenen Formteile Anlaß gibt.

- 13 -

Dies kann jedoch selbst dann, wenn das Material der Haftvermittlerschicht zur Kristallisation neigt, vermieden werden,
wenn die Haftvermittlerschicht in entsprechend geringer Schichtstärke zum Einsatz kommt. Als ausreichend hat es sich erwiesen, wenn die Schichtstärke der Haftvermittlerschicht weniger
als die Hälfte , vorzugsweise weniger als ein  Drittel der
Gesamtstärke der Schutzfolie beträgt.

Ein besonderer zusätzlicher Vorteil, der sich aus der Verwendung von PVC-Schutzfolien und  in gewissem Umfang auch
von CPE-Schutzfolien  in Verbindung mit Tiefziehfolienzuschnitten
aus einer PVC-ABS-Abmischung ergibt, ist darin zu sehen,
daß die bei der Herstellung der Tiefziehfolienzuschnitte unvermeidlich auftretenden Abfälle verhältnismäßig leicht zu
hochwertigen Regeneraten aufgearbeitet werden können wegen
der Artverwandtschaft des Schutzfolienmaterials und des
Tiefziehfolienmaterials. Hinzu kommt, daß bei einer solchen
Kombination die Erweichungspunkte des Schutzfolienanteils
und des Tiefziehfolienanteils nahe genug beisammenliegen
(nämlich in der Gegend von ca. 150-170°C), so daß bei Erreichen des das Tiefziehen ermöglichenden plastfizierten Zustands der Tiefziehfolie auch die Schutzfolie in einem soweit
plastifizierten Zustand vorliegt, daß sie ohne Reckung dem
Tiefziehvorgang mit unterworfen werden kann und deshalb kein
Erinnerungsvermögen an den Zustand vor der Tiefziehverformung
besitzt.

Zum Stand der Technik ist noch zu bemerken, daß es aus der
CH-PS 458 711 bekannt ist, Materialoberflächen durch PVC-Schutzfolien zu schützen, und zwar in der Weise, daß man die Schutzfolie in erwärmtem Zustand auf die zu schützende Materialoberfläche aufkaschiert. Dabei ist auch der Schutz von Kunststoffolienoberflächen in Betracht gezogen worden.  Überdies sind auch Verformungen des Trägers in der Wärme in
Betracht gezogen worden. Es ist aber weder auf die Aufgabe

0044083

hingewiesen worden, bei einem Tiefziehverfahren das Formteil vor Verzug durch ein Erinnerungsvermögen und/oder eine Kristallisierung in der Schutzfolie zu vermeiden, noch ist eine Verfahrensweise angegeben worden, bei welcher die Schutzfolie zur Vermeidung von Erinnerungsvermögen bei der Verformung selbst bis über den Erweichungspunkt erhitzt wird.

Die Verbindung zwischen der Schutzfolie und der Sichtseite der Tiefziehfolie muß so sein, daß das Abziehen der Schutzfolie ohne Zerstörung der Sichtfläche erfolgen kann, insbesondere ohne Beeinträchtigung einer etwa vorhandenen Lackschicht auf der Tiefziehfoliensichtseite. Die Lackschicht auf der Tiefziehfoliensichtseite besteht beispielsweise aus PVC-Acrylat-Lacken, die über eine Druckwalze aufgetragen werden können.

Die erfindungsgemäß zur Anwendung kommenden Schutzfolien mit einem Gehalt an Äthylen-Vinylacetat-Copolymerisat in der Schutzfolie selbst oder in einer besonderen Haftvermittlerschicht zeigen eine ausreichende und doch wieder lösbare Haftung zu der PVC-ABS-Tiefziehfolie und gegebenenfalls zu dem PVC-Acrylatlack. Natürlich muß die durch Kalandrieren erzeugte Haftung zwischen der PVC-Schutzfolie und einer etwaigen Haftvermittlerschicht größer sein als die Haftung zwischen der Haftvermittlerschicht und dem Tiefziehfolienmaterial. Eine ausreichende Haftung zwischen einer PVC-Schutzfolie und einer etwaigen Haftvermittlerschicht kann gegebenenfalls durch Anwendung einer Koronaentladung auf die eine oder die andere oder beide der miteinander zu verbindenden Flächen von Schutzfolie und Haftvermittlerfolie erzielt werden. Die Haftvermittlerschicht braucht nicht aus reinem Äthylenvinylacetat-Copolymerisat zu bestehen, sondern kann ihrerseits aus einer Mischung von Polyäthylen und Äthylenvinylacetat-Copolymerisat bestehen, wobei der Anteil des Äthylenvinylacetat-Copolymerisats in der diese Haftvermittlerschicht bildenden Mischung ihrerseits ein variables Parameter für die Einstellung der Haftfähigkeit zur Lackschicht bildet.

Die Unteransprüche beinhalten Weiterbildungen des erfindungsgemäßen Verfahrens.

Die beiliegenden Figuren erläutern die Erfindung anhand von Ausführungsbeispielen. Es stellen dar:

Fig. 1 einen Schnitt durch eine Tiefziehfolie mit geprägter Feinstruktur und Schutzfolie;

Fig. 1a eine abgewandelte Ausführungsform mit zweischichtiger Schutzfolie;

Fig. 2 einen Zuschnitt gemäß Fig. 1 nach dem Tiefziehvorgang;

Fig. 3 einen tiefgezogenen Zuschnitt gemäß Fig. 2 nach dem Hinterschäumen der Rückseite; und

Fig. 4 einen Formkörper gemäß Fig. 3 nach dem Abziehen der Schutzfolie.

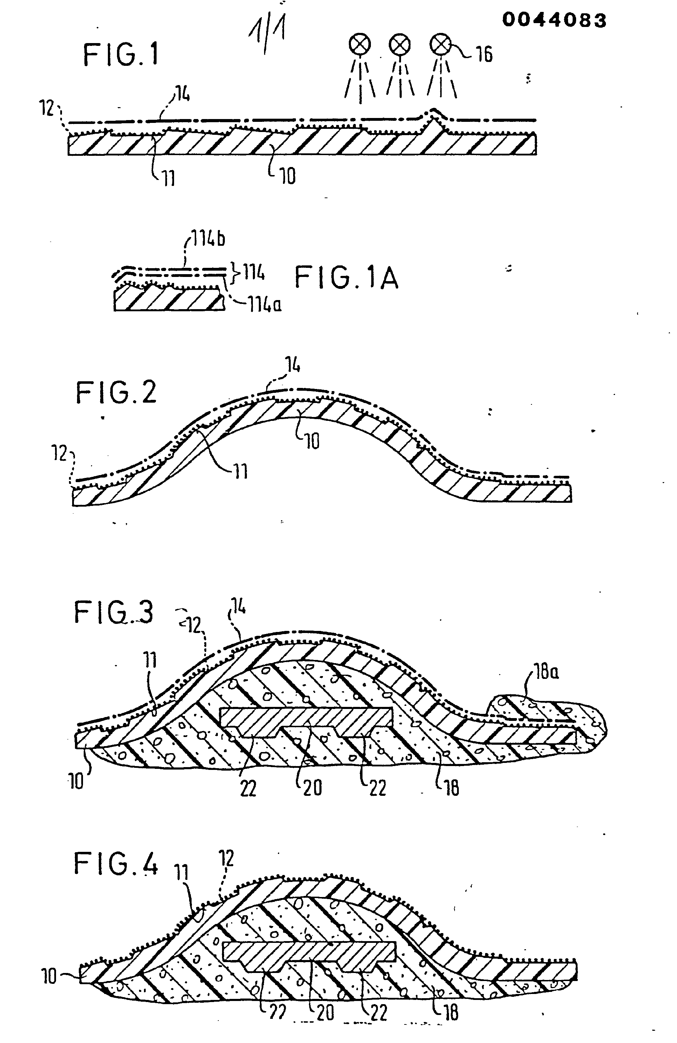

In Fig. 1 ist mit 1o eine Tiefziehfolie bezeichnet, die beispielsweise aus einer PVC-ABS-Mischung besteht. Die Oberfläche 11 dieser Tiefziehfolie ist durch vorangegangenes Prägen, beispielsweise im Kalander, mit einer Feinstruktur versehen worden. Auf die feinstrukturierte Oberfläche 11 (Sichtseite) ist eine durch Punkte angedeutete Lackschicht 12 aufgetragen, beispielsweise aufgerastert, wobei die Prägung vorzugsweise nach der Lackierung stattgefunden hat. Auf die lackierte und geprägte Oberfläche 11 ist eine Schutzfolie 14 aufkaschiert. Die Schutzfolie besteht beispielsweise aus polymerisiertem Äthylenvinylacetat oder aus einer Mischung davon mit Polyäthylen. Durch den Vinylacetatanteil in dem Polymerisat und/oder den Polymerisatanteil in der Mischung ist die Haftung der Schutzfolie an der lackierten Oberfläche 11 derart eingestellt, daß sie während der nachfolgenden Verarbeitungsvorgänge haften bleibt, nach Fertigstellung des Endprodukts aber abgezogen werden.kann. Für die Haftung der Schutzfolie 14 an der Oberfläche 11 ist auch eine etwaige vorherige Koronabehandlung mindestens einer der einander zugekehrten Oberflächen und/oder die Temperatur und/oder der Druck beim Kaschiervorgang verantwortlich. ·

In Fig. 1a ist eine Abwandlung dargestellt, bei welcher die Schutzfolie 114 aus einer Haftvermittlerschicht 114a und einer weiteren Schicht 114b besteht. Dabei besteht die Haftvermittlerschicht 114a wiederum aus polymerisiertem Äthylenvinylacetat oder einer Mischung von Polyäthylen und Äthylenvinylacetat, während die andere Schicht 114b beispielsweise aus Polyäthylen besteht. Bei der Auswahl des Werkstoffs für die Schicht 114b wird besonders auf eine hohe Einreißfestigkeit und Weiterreißfestigkeit geachtet, um das spätere Abziehen der Schutzfolie 114 möglichst in einem Stück zu ermöglichen.

Fig. 1 zeigt weiter Infrarotstrahler 16, welche vor dem Tiefziehen der Tiefziehfolie 1o zu deren Erwärmung eingesetzt werden.

In Fig. 3 erkennt man das Tiefziehformteil 1o nach dem Hinterschäumen mit einem Schaumstoff, insbesondere Polyurethanschaumstoff 18. Dabei ist in den Schaum ein Versteifungskörper 2o mit eingeschäumt, welcher mit Befestigungsansätzen 22 versehen sein kann, etwa um den Formkörper gemäß Fig. 3 an einem zu verkleidenden Teil zu befestigen. ·

In Fig. 4 ist die Schutzfolie 14 abgezogen, wobei Schaumstoffverunreinigungen 18a,welche gemäß Fig. 3 unbeabsichtigterweise auf die Sichtseite gelangt sind, mit entfernt sind.

Die Dicke der Tiefziehfolie liegt beispielsweise zwischen 0,50 mm bis 1,2 mm. Die Dicke der Schutzfolie liegt beispielsweise zwischen 80 und 150µ. Die Schutzfolie ist zwar relativ teuer, indes wird ein Teil der Kosten für die Schutzfolie dadurch wieder aufgehoben, daß die Tiefziehfolie entsprechend dünner gewählt werden kann. Bei dem erfindungsgemäßen Verfahren entfallen auch die umständlichen, zeitraubenden und kostenerhöhenden Schritte des Wachsauftragens und des Waschvorgangs, so daß auch hierdurch die höheren Kosten der Schutzfolie in Kauf genommen werden können.

Nach einem anderen Ausführungsbeispiel gemäß Fig. 1 besteht die Schutzfolie 14 aus transparentem PVC mit einem Gehalt von Äthylen-Vinylacetat-Copolymerisat. Durch diesen Anteil an Äthylen-Vinylacetat-Copolymerisat ist die Haftung der Schutzfolie an der lackierten Oberfläche 11 derart eingestellt, daß sie während der nachfolgenden Verarbeitungsvorgänge haften bleibt, nach Fertigstellung des Endprodukts aber abgezogen werden kann. Für die Haftung der Schutzfolie 14 an der Oberfläche 11 bz 12 ist auch eine etwaige vorherige Koronabehandlung mindestens einer der einander zugekehrten Oberflächen und/oder die Temperatur und/oder der Druck beim Kaschiervorgang verantwortlich.

Nach einem anderen Ausführungsbeispiel gemäß Fig. 1a besteht die Haftvermittlerschicht 114a wiederum aus Äthylen-Vinylacetat-Copolymerisat oder einer Mischung von Polyäthylen und Äthylen-Vinylacetat-Copolymerisat, während die andere Schicht 114b beispielsweise aus PVC besteht. Bei der Auswahl des Werkstoffs für die Schicht 114b wird auch hier besonders auf eine hohe Einreißfestigkeit und Weiterreißfestigkeit geachtet, um das spätere Abziehen der Schutzfolie 114 möglichst in einem Stück zu ermöglichen. Die Schichtstärke der Schicht 114b beträgt ca. ein Drittel der Gesamtschichtstärke der Schicht 114a und 114b zusammen.

Die Dicke der Tiefziehfolie liegt beispielsweise zwischen
0,50 mm bis 1,2 mm. Die Dicke der Schutzfolie liegt beispielsweise zwischen 80 und 150 µ, wovon ein Drittel auf
die Haftvermittlerschicht entfällt. Die Tiefziehfolie wird
vor dem Tiefziehvorgang auf eine Temperatur von 150-170°C
gebracht; dabei wird die Schutzfolie ebenfalls in einen
plastischen Zustand versetzt, welcher das Tiefziehen gestattet und ein Erinnerungsvermögen in der Schutzfolie, zumindest in der PVC-Schicht 114b, vermeidet.

Im Falle der Ausführungsform gemäß Fig. 1 kann der notwendige
Anteil an Haftvermittler in der Schutzfolie 14, beispielsweise Anteil an Vinylacetat-Copolymerisat, leicht durch einfache Vorversuche bestimmt werden.

Die Erfindung umfaßt auch noch folgenden weiteren Gedanken:
ein aus einem amorphen Thermoplasten z.B. PVC oder CPE oder
einem PVC-CPE-Gemisch bestehende Schutzfolie wird auf die
lakierte Tiefziehfolie unter Wärme aufkaschiert, etwa in der
Weise, daß zunächst die Tiefziehfolie vorgewärmt wird, im
Falle einer PVC-ABS Tiefziehfolie auf ca. 130°C, und daß die
Tiefziehfolie sodann mit der Schutzfolie zusammenkaschiert
wird. Wegen der angewandten Temperatur ergibt sich eine gut
haftende Verbindung zwischen der Schutzfolie und der auf der
Tiefziehfolie aufgetragenen Lackschicht, so daß es weder einer
Koronabehandlung bedarf, noch eines Zusatzes von haftfreundlichen Substanzen zu der Schutzfolie, wie EVA. Unter Umständen
ist die Haftung der Schutzfolie auf dem Lack sogar so gut,
daß die Lackschicht beim Abziehen der Schutzfolie von dem Tiefziehteil mit abgerissen werden kann. Um ein solches Abreißen
der Lackschicht zu verhindern, wird deshalb weiter vorgeschlagen, daß der Lackschicht ein Gleitmittel zugesetzt wird, welches
eine abweisende Wirkung zu der jeweiligen Schutzfolie aufweist.

Als Lacke kommen auch bei dieser Verfahrensweise PVC-Acrylatlacke oder Polyuretanlacke in Frage. Als Gleitmittel kommen
in beiden Fällen beispielsweise Polyäthylenwachse oder Stearinsäuren in Frage, wobei auch hier wieder die stoffliche Zusammensetzung und der Gehalt des Gleitmittels so eingestellt
werden, daß die Haftung zwischen der Schutzfolie und der Sichtseite der Tiefziehfolie bzw. dem auf dieser Sichtseite aufgebrachten Lack auf 1 bis 10N/5 cm bei einer Abzugsgeschwindigkeit von 100 mm/Min. eingestellt wird.

Die als Schutzfolien zur Anwendung kommenden PVC-Folien sind
beispielsweise Weich-PVC-Folien mit einer Härte von beispielsweise 37 shore D.

Patentansprüche

1. Verfahren zur Herstellung von Formkörpern, welche aus einem tiefgezogenen Tiefziehfolienzuschnitt bestehen und auf ihrer Rückseite ausgeschäumt sind, wobei auf der Sichtseite des Tiefziehfolienzuschnitts eine Schutzfolie bereits vor dem Tiefziehen und dem Ausschäumen aufgebracht wird, welche mit der Sichtseite der Tiefziehfolie eine den Tiefziehvorgang und den Ausschäumvorgang überdauernden Haftverbindung eingeht, jedoch andererseits an der Tiefziehfolie nur so weit haftet, daß nach Fertigstellung des Formteils die Schutzfolie mit etwa an ihr haftendem Schaum möglichst ohne Einreißen wieder von der Sichtseite abgezogen werden kann, d a d u r c h   g e - k e n n z e i c h n e t ,   daß die Schutzfolie auf eine vorher, insbesondere durch Prägen mit einer Feinstruktur versehenen Sichtseite der Tiefziehfolie aufgebracht wird.

2. Verfahren nach Anspruch 1, d a d u r c h   g e k e n n - z e i c h n e t ,   daß die Tiefziehfolie vor dem Tiefziehen durch Wärmestrahlung, insbesondere auch von der Sichtseite her, erhitzt und dadurch in einen plastischer Verformung fähigen Zustand gebracht wird.

3. Verfahren nach einem der Ansprüche 1 und 2, d a d u r c h g e k e n n z e i c h n e t ,   daß als Tiefziehfolie eine PVC-ABS-Folie (Acrylnitril-Butadien-Styrol) verwendet wird.

4. Verfahren nach einem der Ansprüche 1 bis 3, d a d u r c h g e k e n n z e i c h n e t ,   daß eine Tiefziehfolie verwendet wird, welche auf ihrer Sichtseite mit einer Lackschicht, beispielsweise aus PVC-Acrylatlack, beschichtet ist.

5. Verfahren insbesondere nach einem der Ansprüche 1 bis 4, d a d u r c h   g e k e n n z e i c h n e t ,   daß eine Tiefziehfolie ver-

wendet wird, deren Dicke geringer ist, als die bei isoliertem Tiefziehen (ohne Schutzfolie) erforderliche
Mindestdicke und daß die Schutzfolie in ihrer Dicke und
stofflichen Zusammensetzung derart gewählt wird, daß sie
dem aus Tiefziehfolie und Schutzfolie bestehenden Verbundmaterial die für die Verarbeitung notwendigen Eigenschaften, insbesondere Steifigkeit, Narbstabilität und
Beständigkeit der optischen Reflexionseigenschaften verleiht.

6. Verfahren nach einem der Ansprüche 1 bis 5, d a d u r c h   g e k e n n -
z e i c h n e t ,   daß als Schutzfolie eine Folie verwendet wird, welche zumindest an ihrer der Sichtseite der
Tiefziehfolie zugekehrten Seite einen Anteil an Äthylenvinylacetat enthält.

7. Verfahren nach Anspruch 6, d a d u r c h   g e k e n n -
z e i c h n e t ,   daß eine Schutzfolie verwendet wird,
welche an ihrer der Sichtseite der Tiefziehfolie zugekehrten Seite aus einem Kopolimerisat von Äthylen und Äthylenvinylacetat besteht.

8. Verfahren nach einem der Ansprüche 6 und 7, d a d u r c h
g e k e n n z e i c h n e t ,   daß eine mehrschichtige
Schutzfolie verwendet wird, deren der Sichtseite der Tiefziehfolie zugekehrte Schicht Äthylenvinylacetat enthält.

9. Verfahren nach Anspruch 8, d a d u r c h   g e k e n n -
z e i c h n e t ,   daß eine mehrschichtige Schutzfolie
verwendet wird, deren von der Sichtseite der Tiefziehfolie
abgelegene Schicht eine hohe Weiterreißfestigkeit besitzt,
z. B. aus Polyähtylen.

10. Verfahren nach einem der Ansprüche 1 bis 9, d a - d u r c h  g e k e n n z e i c h n e t, daß die Schutzfolie nach vorhergehender Koronabehandlung ihrer der Tiefziehfolie zugekehrten Seite und/oder nach vorhergehender Koronabehandlung der Sichtseiten der Tiefziehfolie mit der Tiefziehfolie zusammen kaschiert wird.

11. Verfahren nach einem der Ansprüche 1 bis 10, d a - d u r c h  g e k e n n z e i c h n e t, daß die Haftung zwischen der Schutzfolie und der Sichtseite der Tiefziehfolie bzw. dem auf dieser Sichtseite aufgebrachten Lack von 1 bis 10N/5 cm bei einer Abzugsgeschwindigkeit von 100 mm/Min. eingestellt wird.

12. Verfahren insbesondere nach einem der Ansprüche 1 bis 11, d a d u r c h  g e k e n n z e i c h n e t, daß eine transparente Schutzfolie verwendet wird.

13. Verfahren insbesondere nach einem der Ansprüche 1 bis 12, d a d u r c h  g e k e n n z e i c h n e t, daß eine Schutzfolie verwendet wird, welche die zur Aufheizung der Tiefziehfolie vor dem Tiefziehvorgang eingesetzte Wärmestrahlung weniger absorbiert als die Tiefziehfolie selbst.

14. Verfahren zur Herstellung von Formkörpern, welche aus einem tiefgezogenen thermoplastischen Tiefziehfolienzuschnitt bestehen und auf ihrer Rückseite ausgeschäumt sind, wobei auf der Sichtseite des Tiefziehfolienzuschnitts eine thermoplastische Schutzfolie bereits vor dem Tiefziehen und dem Ausschäumen aufgebracht wird, welche mit der Sichtseite der Tiefziehfolie eine die Erwärmung auf die für den Tiefziehvorgang erforderliche Tiefziehtemperatur sowie den Tiefziehvorgang und den Ausschäumvorgang überdauernde Haftverbindung eingeht, jedoch andererseits an der Tiefziehfolie nur so weit haftet, daß nach Fertigstellung des Formteils die Schutzfolie mit etwa an ihr haftendem Schaum möglichst ohne Einreißen wieder von der Sichtseite abgezogen werden kann, insbesondere nach einem der Ansprüche
1 bis 5 und 10 bis 13, d a d u r c h   g e k e n n z e i c h -
n e t,   daß eine Schutzfolie verwendet wird, welche wenigstens  zum Teil aus amorphem Material besteht, welches
beim Abkühlen von der Tiefziehtemperatur und der nachfolgenden Lagerung des Formkörpers keinen wesentlichen Schrumpf
erleidet.

15. Verfahren nach Anspruch 14, d a d u r c h   g e k e n n -
z e i c h n e t,   daß die Schutzfolie wenigstens zum Teil
aus einem Material besteht, welches beim Abkühlen von der
Tiefziehtemperatur und der nachfolgenden Lagerung keine
wesentliche Kristallisierung erleidet.

16. Verfahren nach einem der Ansprüche 14 und 15, d a d u r c h
g e k e n n z e i c h n e t,   daß die Schutzfolie eine
1-Schichtfolie ist, welche gegebenenfalls einen Haftvermittleranteil enthält.

17. Verfahren nach einem der Ansprüche 14 und 15, d a d u r c h
g e k e n n z e i c h n e t,   daß die Schutzfolie eine
Mehrschichtfolie, insbesondere eine 2-Schichtfolie ist,
wobei eine außenliegende Schicht eine Haftvermittlerschicht
ist.

18. Verfahren nach einem der Ansprüche 14 bis 17, d a d u r c h
g e k e n n z e i c h n e t,   daß die Schutzfolie PVC enthält.

19. Verfahren nach einem der Ansprüche 14 bis 17, d a d u r c h
g e k e n n z e i c h n e t,   daß die Schutzfolie chloriertes Polyäthylen (CPE) enthält.

20. Verfahren nach einem der Ansprüche 16 bis 19, d a d u r c h

g e k e n n z e i c h n e t , daß der Haftvermittler
ein Äthylenvinylacetat-Copolymerisat (EVA) enthält.

21. Verfahren nach einem der Ansprüche 17 bis 20, d a d u r c h
g e k e n n z e i c h n e t , daß die Schichtstärke der
Haftvermittlerschicht weniger als die Hälfte, vorzugsweise
weniger als ein Drittel der Gesamtstärke der Schutzfolie
beträgt.

22. Verfahren  nach einem der Ansprüche 14 bis 16, 18 und 19,
d a d u r c h  g e k e n n z e i c h n e t , daß auf eine
mit einer Lackschicht, z.B. PVC-Acrylatlack oder Polyuretanlack, beschichtete Tiefziehfolie eine Schutzfolie aus einem
amorphen Thermoplasten, z.B. PVC oder CPE oder einem Gemisch aus PVC und CPE bestehende Schutzfolie unter Wärme
aufgebracht wird, und die Haftung der Schutzfolie an der
Lackschicht durch Zusatz eines Gleitmittels (Trennmittels)
zu der Lackschicht  auf die gewünschte Abzugsfähigkeit eingestellt wird.

23. Verfahren nach Anspruch 22, d a d u r c h  g e k e n n -
z e i c h n e t , daß als Gleitmittel ein Polyäthylenwachs
oder eine Stearinsäure verwendet wird.

24. Verfahren nach Anspruch 22 und 23, d a d u r c h  g e -
k e n n z e i c h n e t , daß die Schutzfolie und/oder
die Tiefziehfolie vor dem Zusammenkaschieren erhitzt
werden.

FIG.1

1/1

0044083

FIG.1A

FIG.2

FIG.3

FIG.4

| | | | |
|---|---|---|---|

**Europäisches Patentamt**

# EUROPÄISCHER RECHERCHENBERICHT

Nummer der Anmeldung

EP 81 10 5525.0

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| P,E | EP - A1 - 0 029 608 (ALKOR GMBH KUNSTSTOFFVERKAUF) <br> * Ansprüche 1 bis 14 * <br> — | 1-14 | B 29 D 27/04 <br> B 29 C 17/03 |
| A | DE - A1 - 2 544 664 (UPJOHN CO.) <br> * Anspruch 1 * <br> — | | |
| A | DE - B2 - 2 656 965 (GEBR. HAPPICH) <br> * Anspruch 1 * <br> — | | RECHERCHIERTE SACHGEBIETE (Int. Cl.³) |
| A | DE - A1 - 2 802 781 (IRBIT HOLDING AG ) <br> * Seite 9, Absatz 1 * <br> — | | B 29 C 17/03 <br> B 29 D 9/00 <br> B 29 D 27/00 |
| A | DE - A - 1 629 395 (ETABLISSEMENTS MAUREL FRERES) <br> * Ansprüche 1 bis 9 * <br> —— | | B 32 B 1/00 <br> B 32 B 5/00 <br> B 32 B 31/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 21-08-1981 | BITTNER |

EPA form 1503.1 06.78